# EUROPÄISCHE PATENTANMELDUNG

(11) **EP 0 883 138 A2**
(43) Veröffentlichungstag der Anmeldung: **09.12.1998**
(21) Anmeldenummer: 98109160.6
(22) Anmeldetag: 20.05.1998
(51) Int. Cl.: H01B 7/34

(54) **Kabelanlage zur Übertragung grosser Leistungen**

(30) Priorität: 06.06.1997 DE 19723879
(71) Anmelder: Felten & Guilleaume AG, 51063 Köln (DE)
(72) Erfinder: Bunselmeyer, Michael, Dipl.-Ing., 26316 Varel (DE); Osterwohldt, Karl Heinz, 26954 Nordenham (DE); Deusser, Peter, Dipl.-Ing., 26954 Nordenham (DE); Storzer, Hans-Dieter, Dipl.-Ing., 26954 Nordenham (DE); Först, Bernd, 26349 Jaderberg (DE); Kunz, Andreas, Dipl.-Ing., 26919 Brake (DE); Brakelmann, Heinrich, Prof. Dr.-Ing., 47495 Rheinberg (DE)

(57) **Zusammenfassung**

Die Erfindung betrifft eine Kabelanlage zur Übertragung großer Leistungen durch Hochspannungskabel (30), mit wenigstens einem hierzu parallel verlegten, von einem Kühlmittel durchströmten Rohr sowie wenigstens einer das Kühlmittel in dem Rohr (6) antreibenden Pumpeinheit (7), deren Antrieb aus dem Strom mindestens eines der Hochspannungskabel bezogen wird. Solche Kabelanlagen sind relativ aufwendig oder aber es halten sich die erreichbaren Spannungen, die über Transformatoren dem Hochspannungskabel entnommen werden, in Grenzen. Es wird daher vorgeschlagen, daß parallel zur Kabelanlage mindestens zwei Induktionsleiterkabel mit je mindestens zwei Leiteradern (40.1,40.2; 41.1,41.2) gelegt werden, von denen je zwei (40.1,41.1) als Schleife hintereinander geschaltet sind, wobei in der Schleife durch den Strom mindestens eines der Hochspannungskabel (30) eine Arbeitsspannung induziert wird. Mit dieser Spannung kann einer Pumpeinheit (7) oder ein Wärmeaustauscher oder ein Kühlaggregat betrieben werden.

## Beschreibung

Es sind Kabelanlagen zur Übertragung großer Leistungen mit außenliegendem Kühlmittelantrieb bekannt, bei denen die Kühlmittelpumpe eines Kühlsystems über Induktionswirkung direkt vom Übertragungstrom der Kabel der Kabelanlage angetrieben wird (DE 36 27149 A1). Die Einspeisung der Umwälzumpe unter Ausnutzung der Induktionswirkung kann hierbei entweder durch einen um das Kabel angeordneten Transformator oder direkt aus dem Kabelmantel erfolgen.

Die Realisierung des ersten Vorschlags ist verhältnismäßig aufwendig. Die zweite Alternative ist technisch problematisch, da die an den Kabelmänteln (oder -schirmen) zur Verfügung stehenden, induzierten Spannungen verhältnismäßig gering sind. Eine typische Größenordnung des Mantelspannungsbelags für ein in einer Ebene verlegtes Hochspannungskabel ist 50 mV/(m kA). D.h. bei einem Übertragungstrom von 1 kA kann erst nach einer Kabellänge von 1 km eine Mantelspannung von 50 V abgegriffen werden. Sowohl die verfügbare Mantelspannung als auch die verfügbare elektrische Leistung hängen in diesem Fall linear von der Kabellänge ab.

Es ist Aufgabe der Erfindung, das angesprochene Problem zu lösen.

Die Lösung der Aufgabe findet sich im Kennzeichen des Hauptanspruchs. Vorteilhafte Weiterbildungen finden sich in den Unteransprüchen.

Das Wesentliche der Erfindung besteht darin, daß parallel zu den Hochspannungskabeln eine gerade Anzahl von Leiteradern in zwei Gruppen verlegt sind und die Enden der Adern der ersten Gruppe mit den Enden der Adern der zweiten Gruppe verbunden sind und die Anfänge der Adern der ersten Gruppe mit den Anfängen der Adern der zweiten Gruppe so verschaltet sind, daß die verschalteten Adern eine durchgehende Induktionsleiterschleife (Induktionsleitersystem) bilden, in der durch den Strom eines der Hochspannungskabel eine Arbeitsspannung induziert wird.

Die Erfindung wird vorzugsweise in drei Ausführungen dargestellt, wobei eine oder beide Gruppen der Induktionsleiter integriert sind in: (a) entweder in den Mantel/Schirmbereich der Kabel selber oder (b) direkt in die Kühlrohre oder aber (c) in eigenständigen Mehrleiterkabeln.

Im Prinzip besteht ein solches Induktionsleitersystem aus mehreren isolierten Adern vorzugsweise 1-kV-Kabeladern mit Leiterquerschnitten vorzugsweise im Bereich von 1,5 bis 10 mm². Im Fall (a) werden diese in den Mantel-/Schirmbereich von Kabeln integriert. Im Fall (b) können sie um das Kühlrohr verseilt (wobei zusätzlicher Korrosionsschutz erforderlich ist), oder aber direkt in das Kühlrohrmaterial eingebettet sein. Im Fall (c) wird vorzugsweise vorgeschlagen, vieladrige 1-kV-Kabel (z.B. bis zu 40adrig) zu verwenden.

Eine einfache Ausführung der Erfindung könnte darin bestehen, zwei zweiadrige Induktionsleiterkabel in die Umgebung des Hochspannungskabels zu legen und ihre Adern so zu verschalten, daß eine Schleife entsteht. So werden - je nach Verlegeanordnung des Hochspannungskabels und nach Position der Induktionsleiterkabel - in deren Adern unterschiedliche Spannungen induziert. So können die Längsspannungen in den beiden Induktionsleiterkabeln gegeneinander in der Phasenlage z.B. um 120° oder auch um 180° verschoben sein (vergl. z.B. Aufsatz von H. Brakelmann in etz-Archiv (1988) S. 361-365).

Um die Wirkung einer Induktionsspule zu erreichen, verbindet man das Ende der ersten Ader des ersten Kabels mit dem Ende der ersten Ader des zweiten Kabels, dessen Anfang mit dem Anfang der zweiten Ader des ersten Kabels und dessen Ende schließlich mit dem Ende der zweiten Ader des zweiten Kabels. Auf diese Weise kann am Anfang beider Induktionsleiterkabel zwischen erster Ader des ersten Kabels und zweiter Ader des zweiten Kabels Speisespannung für eine Pumpeinheit und/oder für ein Kühlaggregat abgegriffen werden. Der Betrag der Spannung beläuft sich auf das Vierfache der Längsspannung, die zwischen Anfang und Ende einer einzigen Ader induziert wird.

Die induzierte Spannung eines solchen Systems wächst daher nicht nur mit der Kabellänge, sondern auch mit der Anzahl der Adern der Induktionsleiterkabel. Es kann gezeigt werden, daß auch die nutzbare Leistung eines solchen Induktionsleitersystems linear mit der Adernzahl wächst.

Mit der Erfindung steht ein Induktionssystem zur Verfügung, mit dem bei geeigneter Auslegung Spannungen in gewünschter Größe und auch große Leistungen genutzt werden können. Vorzugsweise wird vorgeschlagen, die Spannung für den Antrieb von Kühlmittelpumpen, gegebenenfalls aber auch für Wärmetauscher/Kühlsysteme zu nutzen.

Als autark zu kühlende Kabel kommen alle Kabeltypen in Frage insbesondere auch die Rohrkabel (z.B. Gasaußendruckkabel). Mögliche Kühlarten sind - je nach Kabelkonstruktion die Lateralkühlung, die Oberflächenkühlung, die Bündelkühlung (mit einem Beispiel in DE 42 09 928 C1) und auch die Leiterkühlung (vergl. DE 3627149 A1).

Integriert man das Induktionsleitersystem direkt in die Kühlrohre, so steht ein Kühlsystem zur Verfügung, das in bestimmen Abständen an seinen Enden elektrisch zu verschalten und mit Umwälzpumpen und z.B. Unter-Flur-Wärmetauschern verbunden werden kann. Hiermit eröffnen sich Möglichkeiten, Kabelgräben auch nachträglich zu ertüchtigen, thermisch zu entlasten oder auch einer Wärmerückgewinnung zuzuführen.

Bei allen genannten Kühlarten besteht die Möglichkeit, auf die beschriebene Art längs eines Kühlabschnitts mehrere Umwälzpumpen längs der Trasse einzusetzen und so das Druckprofil in den Kühlrohren zu stufen. Auf diese Weise umgeht man die durch den höchstzulässigen Druck der Rohre gegebene, oft entscheidende Einschränkung der Kühlmöglichkeiten und erhöht den erforderlichen Kühlstationenabstand.

Als besonderer Einsatzbereich kommen kurze, thermisch schwierige Bereiche in Kabeltrassen in Betracht: Muffenbereiche oder Kreuzungen mit anderen Kabeln oder Fernwärmerohren. Solche thermischen Schwachstellen begrenzen als "bottle necks" oft das Übertragungsvermögen der gesamten Kabelanlage. Als Hilfsmaßnahme ist für solche Fälle bereits der Einsatz von Wärmerohren (sog. "heat pipes") in Betracht gezogen und in wenigen Fällen auch realisiert worden. Allerdings sind die mit Wärmerohren abführbaren Wärmemengen gering, wenn die Wärmerohrlänge einige Meter übersteigt. Die Möglichkeiten des vorgeschlagenen Kühlrohrsystems mit integriertem Induktionsleitern und Umwälzpumpe sind weitaus größer.

Ausführungsformen der Erfindung werden in den Figuren dargestellt. Sie zeigen im Einzelnen
- Fig. 1:: ein Induktionsleitersystem integriert im Mantel/Schirmbereich eines Hochspannungskabels,
- Fig. 2:: ein Induktionsleitersystem in einem Kühlrohr,
- Fig. 3:: ein vieladriges Kabel und
- Fig. 4:: eine Kabelanlage mit zwei zweiadrigen Induktionsleiterkabeln.

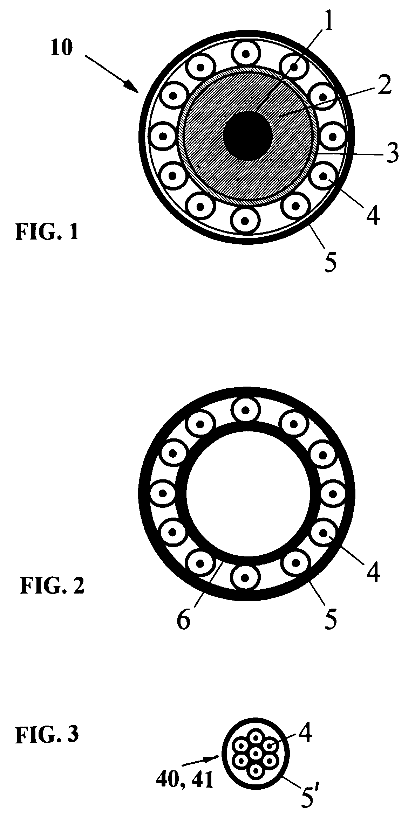

In Fig. 1 zeigt den Querschnitt eines Hochspannungskabels 10 mit den Einzelheiten: 1 Leiter, 2 Isolierung, 3 Mantel/Schirm, 4 isolierte Leiter des Induktionsleitersystems und 5 Korrosionsschutz. In Fig. 2 ist ein Kühlrohr 6 im Querschnitt dargestellt. Um das Rohr herum ist eine Vielzahl von Kabeladern 4 verseilt, die gemäß der Einfindung verschaltet werden können. Das Kühlrohr ist mit Korrosionsschutz versehen. Fig. 3 zeigt ein Mehrleiterkabel mit Einzeladern 4 und Mantel 5'.

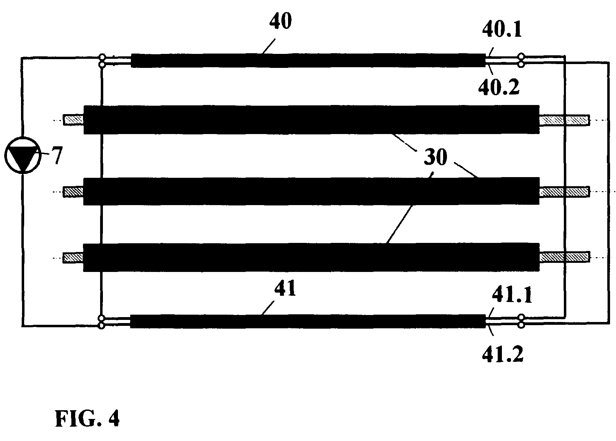

Im Zentrum der Fig. 4 liegen die Hochspannungskabel 30 der Kabelanlage. Parallel liegen hierzu zwei Induktionsleiterkabel 40,41. Die einzelnen Adern der beiden Induktionsleiterkabel 40,41 sind so miteinander verschaltet, daß die Wirkung einer Spule entsteht: das Ende von Ader 40.1 auf das Ende von Ader 41.1, dessen Anfang auf den Anfang der Ader 40.2 und dessen Ende schließlich auf das Ende der Ader 41.2. Auf diese Weise kann am Anfang der Induktionsleiterkabel zwischen den Adern 40.1 und 41.2 im Beispiel der induzierten Phasenopposition das Vierfache der Längsspannung abgegriffen werden, die zwischen Anfang und Ende einer einzigen Ader induziert wird. Eine Pumpeinheit 7 wird also von der Spannung dieser Schleife versorgt.

## Patentansprüche

1. Kabelanlage zur Übertragung großer Leistungen durch Hochspannungskabel (30), mit wenigstens einem hierzu parallel verlegten, von einem Kühlmittel durchströmten Rohr sowie einer Einheit (7), die das Kühlmittel in dem Rohr (6) antreibt und/oder kühlt und deren Arbeitsspannung aus dem Strom mindestens eines der Hochspannungskabel bezogen wird, **dadurch gekennzeichnet**, daß parallel zur Kabelanlage mindestens vier oder mehr Adern in gerader Anzahl in zwei Gruppen vorhanden sind, daß die Enden der Adern (40.1, 40.2) der ersten (40) mit den Enden der Adern (41.1,41.2) der zweiten Gruppe (41) verbunden und die Anfänge der Adern der ersten (40) mit den Anfängen der Adern der zweiten Gruppe (41) so verschaltet sind, daß die verschalteten Adern eine einzige Leiterschleife bilden, wobei in der Leiterschleife durch den Strom mindestens eines der Hochspannungskabel (30) eine Arbeitsspannung induziert wird.

2. Kabelanlage nach Anspruch 1, **dadurch gekennzeichnet**, daß die Adern (40.1, 40.2, 41.1, 41.2) Querschnitte von bis zu 10 mm² haben.

3. Kabelanlage nach einem der vorhergehenden Ansprüche, **dadurch gekennzeichnet**, daß die Arbeitsspannung zum Betrieb mindestens einer Pumpeinheit (7) und/oder mindestens eines Wärmeaustauschers und/oder mindestens eines Kühlaggregats verwendet wird.

4. Kabelanlage nach einem der Ansprüch 1 bis 3, dadurch gekennzeichnet, daß mindestens eine Gruppe (40.1,41.1) von Adern in einem Kabel (10,40,41) oder in einem Kühlmittel führenden Rohr (6) oder im Mantel oder Schirm (3) eines der Hochspannungskabel (30) integriert ist.
